# EUROPEAN PATENT SPECIFICATION

(11) **EP 3 889 471 B1**
(45) Date of publication and mention of the grant of the patent: **12.06.2024**
(21) Application number: 20167735.8
(22) Date of filing: 02.04.2020
(51) Int. Cl.: F16J 9/08, B23P 15/06, F16J 9/14

(54) **PISTON RING**
KOLBENRING
SEGMENT DE PISTON

(43) Date of publication of application: 06.10.2021
(73) Proprietor: Winterthur Gas & Diesel Ltd., 8401 Winterthur (CH)
(72) Inventor: Stürm, Thomas, 8505 Dettighofen (CH); Alder, Roland, 8405 Winterthur (CH); Sönnichsen, Samuel, 8405 Winterthur (CH); Räss, Konrad, 8457 Humlikon (CH)
(74) Representative: Hepp Wenger Ryffel AG

(56) References cited:
- EP-A2- 0 878 647
- WO-A1-2012/117987
- WO-A1-2015/098924
- WO-A1-2015/165634
- DE-A1-102008 008 983
- JP-A- H06 281 004
- US-A- 1 353 082

## Description

The invention relates to a piston ring for a piston of a reciprocating internal combustion engine according to the generic term of claim 1, a piston with such a piston ring, a reciprocating internal combustion engine with such a piston and a method for manufacturing a piston ring.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the forced ignition of the fuel, or in mixtures of the two. Furthermore, the term internal combustion engine includes in particular dual-fuel engines and large engines in which the self-ignition of the fuel is used for the forced ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases, like liquid natural gas (LNG), liquid petrol gas (LPG), natural gas (NG), petrol gas (PG) and so on.

Further possible fuels which might be added on request are: LBG (Liquefied Biogas), biological fuels (e. g. oil made from algae or seaweed), ammonia, hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines.

The pistons of reciprocating piston internal combustion engines, in particular reciprocating piston internal combustion engines of the dual-fuel or Otto-cycle type, are provided with piston rings which are seated in grooves in the piston and serve to seal the combustion chamber off from the outside.

The piston rings used in reciprocating piston internal combustion engines and especially in reciprocating piston internal combustion engines of the two-stroke large dual-fuel or Otto-cycle design usually have an essentially rectangular crosssection. Due to a special shaping of the running surface of the piston rings, slight deviations from the rectangular shape can occur in the area of the running surface. The outward facing side of the piston ring can be cambered.

The height of conventional piston rings measured in the axial direction is normally smaller than the cross-sectional dimension in the radial direction, i.e. the difference between the outer and inner diameter. Typical values for the axial height as a function of the nominal diameter of the piston rings are listed in DIN 34110, for example.

Such piston rings are e.g. known from DE 197 20 779 C1.

A piston ring lock, as shown in CH 229278 or EP1655522 B1 may be formed by two locking ends of the piston wherein a tongue is formed at a male locking end of the piston ring and a recess at a female locking end. The recess extends over part of the radial width and axial height of the piston ring.

The tongue and the recess are designed and arranged in such a way that they can slide on each other in the circumferential direction of the piston ring. Due to the tongue, the parting lines in the area of the tongue are interrupted in both axial and radial directions. The design is therefore also called a "gastight" lock.

The dimensions of the tongue and the recess typically are manufactured such that the tongue and the recess have a clearance of between 0.05 and 0.1mm, which is in the same order of magnitude or even greater as the cambering.

WO2015/098924 A1 discloses a piston ring having a first fitting portion with a step shape for receiving a lip of a second fitting portion. The piston ring is constituted such that the tip of the lip is thinner than the base of the lip. when the outer periphery of the piston ring wears out and the fitting portion widens, the lip tip easily deforms so that the lip tip comes into contact with the lip receiving portion, thereby obtaining a sealing property.

US 1,353,082 discloses a piston ring with a locking section comprising inner and outer tongues as well as inner and outer grooves coacting with the tongues. One locking end comprises a central groove on the inside.

JPH 06281004 discloses a piston ring according to the preamble of claim 1.

The contact line of the piston ring with the cylinder regularly is defined by the maximally extending line of the cambering, which for piston ring locks, wherein the recess is opened towards the outside, is arranged on the tongue.

When there arises a pressure from the inner side of the piston ring, the inner part of the piston ring lock, for example a locking end with a recess, presses against the outer part of the piston ring lock, for example a locking end with a tongue.

A pressure from the inner side typically arises, when there is a pressure in the combustion chamber and the piston ring is axially pressed against the piston groove.

However, due to a pressure from the inner side of the piston ring the locking end comprising the recess may move radially outwardly to such an extent, that the maximally extending line of the cambering on the tongue of the other locking end is no longer the radially outermost part of the piston ring lock and the locking end comprising the recess gets in contact with the cylinder.

In this case the cylinder wall may be injured by the sharp edges of the recess.

The invention is based on the task of providing a piston ring, a piston with such a piston ring, a reciprocating internal combustion engine with such a piston and a method for manufacturing a piston ring of the kind mentioned above which avoids the disadvantages of the known and which provides for a sufficient sealing and a long-life durability of the piston ring as well as the cylinder liner.

The problem is solved by a piston ring for a piston of a reciprocating internal combustion engine according to claim 1.

The piston ring comprises a ring section and a lock section.

The piston ring may be a single piece comprising a core made from a cast iron material.

The ring section has a height in axial direction and maximal width in radial direction. The cross section may be rectangular, such that the maximal width corresponds to the constant width of the rectangular shape.

The lock section comprises a male locking end and a female locking end.

The male locking end comprises a tongue which is circumferentially extending and the female locking end comprising a recess which is circumferentially extending, such that the tongue is insertable into the recess.

The recess is sized and shaped to sealingly and slidably receiving the tongue. The tongue may slide circumferentially within the recess to allow expansion and contraction of the piston ring.

The tongue has a maximal width in radial direction which is smaller than the maximal width of the ring section and a height in axial direction which is smaller than the height of the ring section.

Preferably the tongue has a maximal width of 50%-90% of the maximal width of the ring section and a height in axial direction of 20%-80% of the height of the ring section.

The tongue has a radially inwardly facing sliding surface spanned by the circumferential length of the tongue and the height of the tongue. The surface normal of the radially inwardly facing sliding surface points radially inwardly, that is to the center of the piston ring.

The tongue further has an axial sliding surface spanned by the circumferential length and the radial width. The surface normal of the axial sliding surface points axially. When assembled in the respective groove of a piston the surface normal of the axial sliding surface may point towards the combustion chamber.

The recess is opened towards the outside of the piston ring and is arranged between a first shank and a second shank. In a cross-sectional view the shanks of the female locking end basically form an L-shape.

When assembled in a respective groove of the piston the recess may be opened towards a direction pointing away from the combustion chamber, that is to the downside of the piston.

The first shank has a width in radial direction being smaller than the width of the ring section. The first shank provides a radially outwardly facing guiding surface. The outwardly facing guiding surface basically corresponds to the inwardly facing sliding surface of the tongue.

The second shank has a height in axial direction being smaller than the height of the ring section. The second shank provides an axial guiding surface. The axial guiding surface basically corresponds to the axial sliding surface of the tongue.

The maximal width of the ring section is smaller than the sum of a maximal width of at least a circumferentially extending part of the tongue and of a maximal width of at least a first circumferentially extending part of the first shank.

Preferably the maximal width of the ring section is smaller than the sum by 0.01mm to 0.15mm or by 0.1%-0.6%, more preferably 0.17%-0.5%, of the maximal width of the ring section.

When assembled in a respective groove of the piston said circumferentially extending part of the tongue and said first circumferentially extending part of the first shank overlap.

The circumferential region of the overlapping locking ends wherein the sum of the maximal widths of the locking ends is greater than the maximal width of the piston ring is called bridge region. The circumferential lengths of this region may vary since the locking ends may move with respect to each other.

The circumferential length of the bridge region is between 10%-70% of the circumferential length of the recess and/or of the tongue.

The greater maximal radial width in this bridge region ensures that in case of a pressure from the inner side of the ring the outermost part of the lock section remains the same as in case of no pressure.

The difference between the maximal width of the ring section and the sum of the maximal widths of the locking ends in the bridge section is equal or greater than the typical radial space between the overlapping locking ends without any pressure.

Thus, also when the first shank is pressed to the tongue the total maximal radial width of the bridge section is larger than the maximal width of the ring section.

Preferably said circumferentially extending part of the tongue is not arranged adjacent to the free end of the tongue and said first circumferentially extending part of the first shank does not overlap with a region adjacent to the free end of the tongue.

The free end of the tongue is the free end in circumferential direction.

Preferably said first circumferentially extending part of the first shank is arranged adjacent to the free end of the first shank and said circumferentially extending part of the tongue overlaps with a region adjacent to the free end of the first shank. The free end of the first shank is the free end in circumferential direction and corresponds to the free end in circumferential direction of the female locking end.

Close to the free end of the tongue the sum of a maximal width of the tongue and of a maximal width of a respective overlapping part of the first shank should be smaller or equal to the maximal width of the ring section, such that the open end of the tongue does not form an edge in circumferential direction.

In case of a pressure from the inner side of the piston ring the radial space between the locking ends is bridged in the bridge region, whereas in the overlapping region next to the bridge region there is still a radial space between the locking ends. Hence, the free end of the male locking end may have the freedom to bend radially inwardly. Thus, the free end of the tongue does not form a hard edge which could hurt the liner.

Preferably the tongue is arranged on a first axial side of the piston ring, and the recess is open towards the first axial side. Arranged in a groove of a piston, the piston ring in this case is gas tight towards a pressure from a second axial side of the piston ring which is opposite to the first side.

In a preferred embodiment of the piston ring the outward facing side of the piston ring is cambered and in the region of the lock section the maximally extending line is arranged on the tongue.

Preferably the maximally extending line of the cambering is positioned in axial direction in the middle of the height of the piston ring or the maximally extending line divides the height into one quarter and three quarters of the height.

The maximally extending line of the cambering is positioned in axial direction typically at 25% to 33% of the height of the ring profile, measured from the first axial side. The range can extend from 15% to 50%. In addition, the maximally extending line of the cambering is positioned in axial direction such that it runs across the male part.

Alternatively the maximally extending line of the cambering may be positioned in axial direction at 15% to 50%, preferably 25% to 33% of the height of the ring profile, measured from the second axial side. In this case and if the male locking end comprises only one tongue and the female locking end comprises only one recess, the maximally extending line of the cambering may runs above the recess of the female part.

The cambering, in particular the axial position of the maximally extending line of the cambering, defines the axial position of the maximal width of the ring section and the maximal width of the tongue.

Preferably the difference between the maximal width of the ring section and the sum of the maximal widths of the locking ends in the bridge region is greater than the extension of the cambering.

In case of a pressure from the inner side of the piston ring the outwardly facing guiding surface guiding surface of the female locking end presses against the inwardly facing sliding surface of the male locking end.

If the difference between the maximal width of the ring section and the sum of the maximal widths of the locking ends in the bridge region is greater than the extension of the cambering, at least in the bridge region the second shank may not extend further outwardly than the outermost line of the cambering being arranged on the tongue, even if the gap between the locking ends is bridged.

There is no risk, that the edge of the shank hurts the liner, because the liner still is only in contact with the outermost line of the cambering.

A first circumferentially extending part of the radially outwardly facing guiding surface of the first shank may comprise a radially outward facing protrusion.

The radial extension of the protrusion may define the difference between the maximal width of the ring section and the sum of the maximal widths of the locking ends in the bridge region. Hence, the protrusion may for example have a radial width of 0.01mm to 0.15mm or 0.1%to 0.6% of the maximal width of the ring section.

In particular the protrusion circumferentially extends from the end of the female locking end to 10% to 80% of the circumferential length of the first shank, preferably to half of the circumferential length of the first shank. Preferably the protrusion axially extends over the total axial height of the outwardly facing guiding surface of the first shank.

Alternatively or additionally a first circumferentially extending part of the radially inwardly facing sliding surface of the tongue may comprises a radially inward facing protrusion.

The radial extension of the protrusion may define the difference between the maximal width of the ring section and the sum of the maximal widths of the locking ends in the bridge region. Hence, the protrusion may for example have a radial width of 0.05mm to 0.15mm or 0.1%to 0.6% of the maximal width of the ring section.

In particular, the protrusion circumferentially extends over 10% to 100% of the circumferential length of the tongue, preferably extends over at most half of the circumferential length of the tongue. Preferably the protrusion axially extends over the total axial height of the radially inwardly facing sliding surface of the tongue.

Preferably, the protrusion is arranged in a distance to the end of the male locking end.

Alternatively or additionally a depression may be arranged in a second circumferentially extending part of the radially outward facing guiding surface of the first shank.

Preferably the depression is circumferentially arranged in a distance from the free end of the female locking end.

The distance preferably has a circumferential length in a range of 10%-80% of the circumferential length of the first shank.

Preferably, the depression has a circumferentially length of 20%-90% of the circumferential length of the first shank. Preferably, the depression has an axial height that covers the axial height of the first shank. The depression may for example have a radial depth of 0.05mm to 5mm, preferably 0.05mm to 0.2mm, or 0.1%to 0.6% of the maximal width of the ring section.

The second circumferentially extending part of the recess preferably is arranged adjacent to a first circumferentially extending part of the recess having a protrusion, the first circumferentially extending part extending from the end of the female locking end to 10%-80% of the circumferential length of first shank.

The sum of the radial widths of the locking ends in the bridge region may be defined by the radial width of the female locking end in a first circumferential region outside the second circumferential region with the depression and the radial width of the male locking end in the bridge region.

The sum of the radial widths of the locking ends in the bridge region is greater than in the rest of the overlapping region. This may be achieved by a radial protrusion on the first shank in the first circumferential region outside the second circumferential region comprising a depression, and/or by a radial protrusion on the radially inward facing sliding surface of the tongue.

The protrusion on the radially inwardly facing sliding surface of the tongue may circumferentially cover the whole inwardly facing sliding surface, since due to the depression the free end of the tongue is still free to bend inwardly in case of a pressure from the inner side of the piston ring.

The protrusion on the male and/or female locking end may be made of the same material as the core of the piston ring.

Preferably, the protrusion comprises a material, which has a hardness being greater than the hardness of the piston ring in the ring section or of the core of the piston ring. For example the core of the piston ring may have a hardness of 220-280 HB. The protrusion may comprise chrome, nickel and/or ceramic.

A greater hardness may provide for an appropriate support of the tongue in case of a pressure from inner side.

Alternatively the protrusion may have a hardness which is lower than the hardness of the core of the piston ring. The surface of the protrusion will than adapt to the corresponding surface and the corresponding surface will suffer a lower tear and wear.

The protrusion may comprise a soft metal, for example aluminium, bronze, non-ferrous metal, soft iron.

The problem is also solved by a piston ring as claimed in claim 6, preferably a piston ring as described above.

The piston ring comprises a ring section and a lock section.

The ring section has a height in axial direction and maximal width in radial direction. The cross section may be rectangular, such that the maximal width corresponds to the constant width of the rectangular shape, or the piston ring may be cambered.

The lock section comprises a male locking end and a female locking end.

The male locking end comprises a tongue which is circumferentially extending and the female locking end comprising a recess which is circumferentially extending, such that the tongue is insertable into the recess.

The tongue has a maximal width in radial direction which is smaller than the maximal width of the ring section and a height in axial direction which is smaller than the height of the ring section.

The tongue has a radially inwardly facing sliding surface spanned by a circumferential length of the tongue and the height of the tongue.

The tongue further has an axial sliding surface spanned by the circumferential length and the radial width.

The recess is opened towards the outside of the piston ring and is arranged between a first shank and a second shank.

The first shank has a width in radial direction being smaller than the width of the ring section. The first shank provides a radially outwardly facing guiding surface. The outwardly facing guiding surface basically corresponds to the inwardly facing sliding surface of the tongue.

The second shank has a height in axial direction being smaller than the height of the ring section. The second shank provides an axial guiding surface. The axial guiding surface basically corresponds to the axial sliding surface of the tongue.

At least an axially extending groove is arranged at the free end of the male locking end.

Alternatively or additionally at least one groove is arranged at the female locking end.

In particular an axially extending groove is arranged at the free end of the female locking end, in particular in the second shank.

An axially extending groove may be arranged in the recess.

A circumferentially extending groove may be arranged in the outwardly facing surface of the second shank.

Alternatively or additionally at least one hole is arranged at the female locking end, in particular an axial bore in the second shank.

Grooves and holes arranged in the locking ends as described affect the elasticity of at least one of the locking ends, such that the respective locking end tends to give way, to compress and/or to bend under pressure. Thus, the risk, that a free end of a locking end hurts the liner of the cylinder is reduced.

The groove and or the hole provides for to making the edge of the element less stiff. Hence, if the end of the second shank of the female touches the running surface of the liner due to a pressure from the inner side of the piston ring, the force on the edge is distributed on a wider region and hence the maximal force is limited.

In particular, when there is a bridge region in the overlapping region with a higher total radial width, a male locking end with a groove tends to bend inwardly more easily.

At the same time the grooves and holes are arranged such that the lock section still guarantees the gas tightness of the piston ring.

The problem is also solved by a piston ring as described above and as claimed in claim 10.

The piston ring comprises a ring section and a lock section.

The ring section has a height in axial direction and maximal width in radial direction. The cross section may be rectangular, such that the maximal width corresponds to the constant width of the rectangular shape, or the piston ring may be cambered.

The lock section comprises a male locking end and a female locking end.

The male locking end comprises a tongue which is circumferentially extending and the female locking end comprising a recess which is circumferentially extending, such that the tongue is insertable into the recess.

The tongue may have a maximal width in radial direction which is smaller than the maximal width of the ring section and a height in axial direction which is smaller than the height of the ring section.

The tongue may have a radially inwardly facing sliding surface spanned by a circumferential length of the tongue and the height of the tongue. The tongue further may have an axial sliding surface spanned by the circumferential length and the radial width.

The recess may be opened towards the outside of the piston ring and may be arranged between a first shank and a second shank.

The first shank has a width in radial direction being smaller than the width of the ring section. The first shank may provide a radially outwardly facing guiding surface. The outwardly facing guiding surface basically may correspond to the inwardly facing sliding surface of the tongue.

The second shank may have a height in axial direction being smaller than the height of the ring section. The second shank provides an axial guiding surface. The axial guiding surface basically corresponds to the axial sliding surface of the tongue.

A gas barrier is arranged on at least one of the locking ends, preferably on the tongue, more preferably on the radially inwardly facing sliding surface of the tongue and/or on the axial sliding surface of the tongue. The gas barrier at least partly bridges the radial and/or axial space which exists between the overlapping locking ends without any pressure.

In particular the gas barrier may have a height of up to 1mm, preferably 0.01-0.2mm.

The height of the gas barrier corresponds to its projection with respect to the level of the locking end next to the barrier.

The gas barrier may have a circumferential width of 0.5-10mm, preferably 1-5mm and/or of 10%-90% of the circumferential lengths of the locking end.

Preferably the gas barrier has a hardness which is lower than the hardness of the core of the piston ring. The surface of the gas barrier rubs flat when the diameter of the piston ring changes and the locking ends move relatively to each other. Thus, the surface of the gas barrier adapts to the corresponding surface of the other locking end.

Preferably, the gas barrier comprises a material or consists of a material which is corrosion resistant and/or temperature resistant.

The gas barrier may comprise a soft metal, for example aluminium, bronze, non-ferrous metal, soft iron.

The gas barrier may be formed by a layer arranged on the core of the piston blank. The gas barrier may also be formed as a layer arranged in a depression of the core of the piston blank.

The gas barrier further reduces the flow of gas through the lock section of the piston ring.

The lock section may provide a bridge region as described above and a gas barrier. The gas barrier itself may form a protrusion to provide a greater radial width in the bridge region. In this case the gas barrier has two functions, namely guiding the locking ends in case of a pressure from the inner side of the piston ring and reducing the flow of gas.

Alternatively the gas barrier may be arranged next to a protrusion on the tongue or next to a region being in contact with a circumferential region of the recess next to a depression.

The problem is also solved by a piston ring as described above and as claimed in claim 7.

The piston ring comprises a ring section and a lock section. The ring section has a height in axial direction and maximal width in radial direction. The cross section may be rectangular, such that the maximal width corresponds to the constant width of the rectangular shape, or the piston ring may be cambered.

The lock section comprises a male locking end and a female locking end.

The male locking end comprises a first tongue which is circumferentially extending and the female locking end comprises a first recess which is circumferentially extending, such that the first tongue is insertable into the recess.

The first tongue has a maximal width in radial direction which is smaller than the maximal width of the ring section and a height in axial direction which is smaller than the height of the ring section.

The first tongue has a radially inwardly facing sliding surface spanned by a circumferential length of the first tongue and the height of the first tongue.

The first tongue further has an axial sliding surface spanned by the circumferential length and the radial width.

The first recess is opened towards the outside of the piston ring and is arranged between a first shank and a second shank.

The first shank has a width in radial direction being smaller than the width of the ring section. The first shank provides a radially outwardly facing guiding surface. The outwardly facing guiding surface basically corresponds to the inwardly facing sliding surface of the first tongue.

The second shank has a height in axial direction being smaller than the height of the ring section. The second shank provides a axial guiding surface. The axial guiding surface basically corresponds to the axial sliding surface of the first tongue.

The male locking end comprises a second tongue and the female locking end comprising a second recess, such that the second tongue is insertable into the second recess.

The second tongue has a maximal width in radial direction which is smaller than the maximal width of the ring section and a height in axial direction which is smaller than the half of the height of the ring section.

The second tongue has a radially inwardly facing sliding surface spanned by a circumferential length of the second tongue and the height of the second tongue.

The second tongue has an axial sliding surface spanned by the circumferential length of the second tongue and the radial width of the second tongue.

The second recess is also opened towards the outside of the piston ring and is arranged between a third shank and the second shank.

The third shank has a width in radial direction being smaller than the width of the ring section and provides a radially outwardly facing guiding surface being corresponding to the inwardly facing sliding surface of the second tongue.

The second shank provides a second axial guiding surface being corresponding to the axial sliding surface of the second tongue. The second shank thereby provides two axial guiding surfaces, one axial guiding surface facing towards the frits recess, and a second axial guiding surface facing towards the second recess. The guiding surfaces preferably are arranged in parallel.

Preferably, the first tongue and the second tongue basically have the same circumferential length.

A lock section with only one tongue being circumferentially slidable in a corresponding recess may compensate thermal expansion and liner wear. Lock sections with only one tongue and with a bridge section as described above and/or grooves and holes as described above further may compensate or stand a radial force from the inner side of the piston ring.

However, they may not prevent a local twisting of the lock section which may occur due to a great diameter of the piston ring as compared to the cross-sectional dimension. In particular, they may not prevent independent twisting motions of the male and the female locking end. A lock section having overlapping locking ends which are twisted relative to each other may lead to a damaged liner surface.

As the male locking end comprises two tongues and the female locking end comprises two recesses which are formed by the same shank the relative twisting of the locking ends is restricted. The common shank provides for holding locking ends circumferentially in line even in case of a twisting force.

The first and second tongues as well as the first and second recesses are arranged in parallel to each other in circumferential direction. The first and the second tongue both have a radial outer surface facing to the outside of the piston ring and hence to the cylinder liner, when arranged on a piston.

The same effect is also achieved by a piston ring having a first tongue and a first recess as described above and having a second tongue which has a radial outer surface facing towards the inner side of the piston ring.

In this case the male locking end also comprises a second tongue and the female locking end comprises a second recess, such that the second tongue is insertable into the second recess.

The second tongue has a maximal width in radial direction which is smaller than the maximal width of the ring section and a height in axial direction which is smaller than the half of the height of the ring section.

The second tongue has a radially outwardly facing sliding surface spanned by the circumferential length of the second tongue and the height of the second tongue. The second tongue has an axial sliding surface facing oppositely to the axial sliding surface of the first tongue spanned by the circumferential length of the second tongue and the radial width of the second tongue.

Correspondingly the second recess is opened towards the inner side of the piston ring and is arranged between a third shank and the second shank.

The third shank has a width in radial direction being smaller than the width of the ring section and provides a radially inwardly facing guiding surface being corresponding to the outwardly facing sliding surface of the second tongue.

The second shank provides a second axial guiding surface being corresponding to the axial sliding surface of the second tongue.

In this case the two recesses of the female locking end also have a common shank which prevents a twisting of the locking ends. Furthermore, since the first tongue has radially inwardly facing sliding surface and the second tongue has a radially outwardly facing sliding surface a relative radial movement of the locking ends is restricted.

The problem is also solved by a piston of a reciprocating internal combustion engine comprising a piston ring as described above.

The problem is also solved by a reciprocating internal combustion engine, in particular a large vessel engine with at least one cylinder having an inner diameter of at least 200mm, preferably a two-stroke engine and/or a two-stroke cross head engine, comprising a piston as described above, having a piston ring as described above.

The problem is also solved by a method of manufacturing a piston ring as claimed in claim 13.

The piston ring is a piston ring as described above.

The method comprises the following steps.

A blank is provided. The blank may be provided by casting, for example from a cast iron material. The blank may be formed as a closed ring with essentially rectangular cross section or the blank is provided as a rod which is later bent to a ring.

A lock section is milled or cut from the blank. Thereby a ring section is formed having a male locking end and a female locking end. The ring section has a height in axial direction and maximal width in radial direction.

A tongue is formed at the male end of the piston ring and a recess is formed at the female locking end, such that the tongue is insertable into the recess.

The tongue has a maximal width in radial direction which is smaller than the maximal width of the ring section and the tongue has a height in axial direction which is smaller than the height of the ring section.

The tongue has a radially inwardly facing sliding surface spanned by a circumferential length of the tongue and the height of the tongue, and the tongue has an axial sliding surface spanned by the circumferential length and the radial width.

The recess is opened towards the outside of the piston ring and is arranged between a first shank and a second shank.

The first shank has a width in radial direction being smaller than the maximal width of the ring section. The first shank provides a radially outwardly facing guiding surface being corresponding to the radial sliding surface of the tongue.

The second shank has a height in axial direction being smaller than the height of the ring section. The second shank provides an axial guiding surface being corresponding to the axial sliding surface of the tongue.

Preferably, the blank, in particular the outward facing surface of the blank, is coated with a coating material, for example chromium-plated.

The method further comprises the following steps.

A protrusion on a circumferentially extending part of the radially outwardly facing guiding surface of the first shank and/or on a circumferentially extending part of the radially inwardly facing sliding surface of the tongue is provided.

Additionally or alternatively a depression in the radially outwardly facing guiding surface of the first shank is provided.

The protrusion and/or the depression are provided in a way, such that the maximal width of the ring section is smaller than the sum of a maximal width of at least a circumferentially extending part of the tongue and a maximal width of at least a first circumferentially extending part of the first shank, preferably by 0.05mm to 0.15mm or by 0.1%-0.6% of the maximal width of the ring section.

The piston may be mounted in a groove of a piston ring

The overlapping parts of the locking ends comprise a bridge section.

Additionally or alternatively a gas barrier may be provided on the tongue, particular on a circumferentially extending part of the radially inwardly facing sliding surface and of the axially facing sliding surface of the tongue.

In a preferential embodiment of the method a protrusion on a first circumferentially extending part of the radially outwardly facing guiding surface of the first shank and/or on a first circumferentially extending part of the radially inwardly facing sliding surface of the tongue is provided by coating, printing, gluing, screwing, welding, soldering, flame spraying, lasering or electroplating.

Preferably a material, which has a hardness being greater than the hardness of the core of the piston ring, is applied to the core of the piston ring to form the protrusion.

Alternatively or additionally a gas barrier may be by provided by coating, printing, gluing, screwing, welding, soldering, flame spraying, lasering or electroplating.

Preferably a material, which has a hardness being smaller than the hardness of the core of the piston ring, is applied to the core of the piston ring to form the gas barrier.

The problem is also solved by a method of manufacturing a piston ring as claimed in claim 15.

The piston ring is a piston ring as described above.

The method comprises the following steps.

A blank is provided. The blank may be provided by casting, for example from a cast iron material. The blank may be formed as a closed ring with essentially rectangular cross section or as a rod bent to a ring.

A lock section is milled or cut from the blank. Thereby ring section is formed having a male locking end and a female locking end. The ring section has a height in axial direction and maximal width in radial direction.

A tongue is formed at the male end of the piston ring and a recess is formed at the female locking end, such that the tongue is insertable into the recess.

The tongue has a maximal width in radial direction which is smaller than the maximal width of the ring section and the tongue has a height in axial direction which is smaller than the height of the ring section.

The tongue has a radially inwardly facing sliding surface spanned by a circumferential length of the tongue and the height of the tongue, and the tongue has an axial sliding surface spanned by the circumferential length and the radial width.

The recess is opened towards the outside of the piston ring and is arranged between a first shank and a second shank.

The first shank has a width in radial direction being smaller than the maximal width of the ring section. The first shank provides a radially outwardly facing guiding surface being corresponding to the radial sliding surface of the tongue.

The second shank has a height in axial direction being smaller than the height of the ring section. The second shank provides an axial guiding surface being corresponding to the axial sliding surface of the tongue.

Preferably, the blank, in particular the outward facing surface of the blank, is coated with a coating material, for example chromium-plated.

The method further comprises the following steps.

A groove and/or a hole is cut, milled or drilled in the male locking end and/or in the female locking end. In particular at least one vertical groove is made at the end of the male locking end.

Additionally or alternatively at least one groove may be made at the female locking end. The groove may be formed as an axially extending groove at the free end of the female locking end, in particular in the second shank, and/or as an axially extending groove within the recess and/or as a circumferentially extending groove in the outwardly facing surface of the second shank.

Additionally or alternatively at least one hole may be made at the female locking end, in particular an axial bore in the second shank.

The problem is also solved by a method of manufacturing a piston ring. The piston ring is a piston ring as described above.

The method comprises the following steps.

A blank is provided. The blank may be provided by casting, for example from a cast iron material. The blank may be formed as a closed ring with essentially rectangular cross section or as a rod bent to a ring.

A lock section is milled or cut from the blank. Thereby ring section is formed having a male locking end and a female locking end. The ring section has a height in axial direction and maximal width in radial direction.

A tongue is formed at the male end of the piston ring and a recess is formed at the female locking end, such that the tongue is insertable into the recess.

The tongue has a maximal width in radial direction which is smaller than the maximal width of the ring section and the tongue has a height in axial direction which is smaller than the height of the ring section.

The tongue has a radially inwardly facing sliding surface spanned by a circumferential length of the tongue and the height of the tongue and the tongue has an axial sliding surface spanned by the circumferential length and the radial width.

The recess is opened towards the outside of the piston ring and is arranged between a first shank and a second shank.

The first shank has a width in radial direction being smaller than the maximal width of the ring section. The first shank provides a radially outwardly facing guiding surface being corresponding to the radial sliding surface of the tongue.

The second shank has a height in axial direction being smaller than the height of the ring section. The second shank provides an axial guiding surface being corresponding to the axial sliding surface of the tongue.

Additionally the female end may be formed to comprise a second recess and the male end may be formed to comprise a second tongue, such that a piston ring is provided as described above.

Further advantageous aspects of the invention are explained in the following by means of exemplary embodiments and the figures. In the drawings, in a schematic manner:
- Figure 1:: shows a piston ring in a perspective view;
- Figure 2:: shows an example of a lock section in a perspective view;
- Figure 3:: shows a first example of a male locking end in a perspective view;
- Figure 4:: shows an example of an example of a lock section in a top view from below;
- Figure 5:: shows an example of a lock section in a sectional view;
- Figure 6:: shows an example of a lock section in a further sectional view;
- Figure 7:: shows a second example of a male locking end in a perspective view;
- Figure 8:: shows the second example of a male locking end in a sectional view;
- Figure 9:: shows a second example of a female locking end in a perspective view;
- Figure 10:: shows the second example of a female locking end in a sectional view;
- Figure 11:: shows a third example of a female locking end in a perspective view;
- Figure 12:: shows the third example of a female locking end in a sectional view;
- Figure 13:: shows a fourth example of a female locking end in a perspective view;
- Figure 14:: shows the fourth example of a female locking end in a sectional view;
- Figure 15:: shows a third example of a male locking end in a perspective view;
- Figure 16:: shows a third example of a lock section in a perspective view;
- Figure 17:: shows the third example of a lock section in a sectional view;
- Figure 18:: shows a fourth example of a lock section in a perspective view;
- Figure 19:: shows the fourth example of a lock section in a sectional view.

Elements with the same or analogue function are provided with the same reference number.

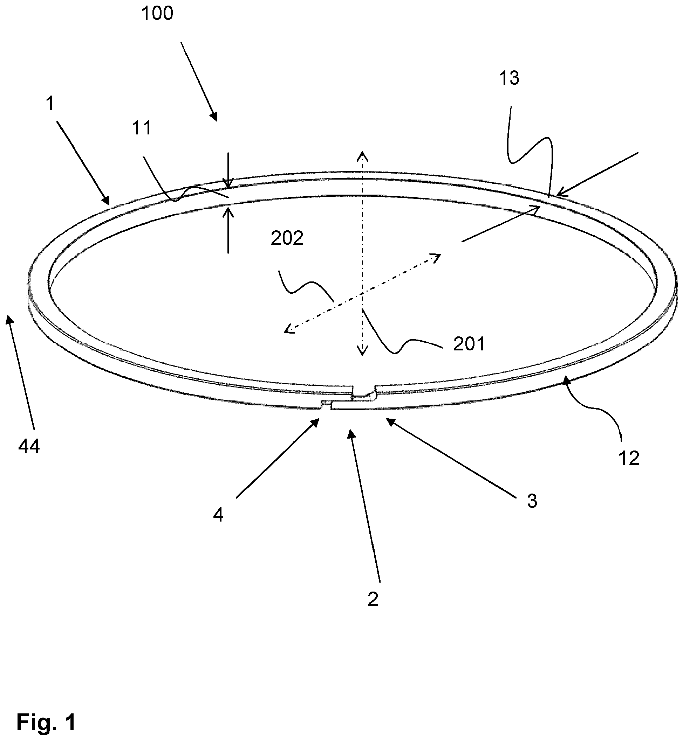

Figure 1 shows a piston ring 100 for a piston of a reciprocating internal combustion engine in a perspective view.

The piston ring 100 comprises a ring section 1 and a lock section 2 with a male locking end 3 and a female locking end 4.

The ring section 1 has a height 11 in axial direction 201 and maximal width 13 in radial direction 202.

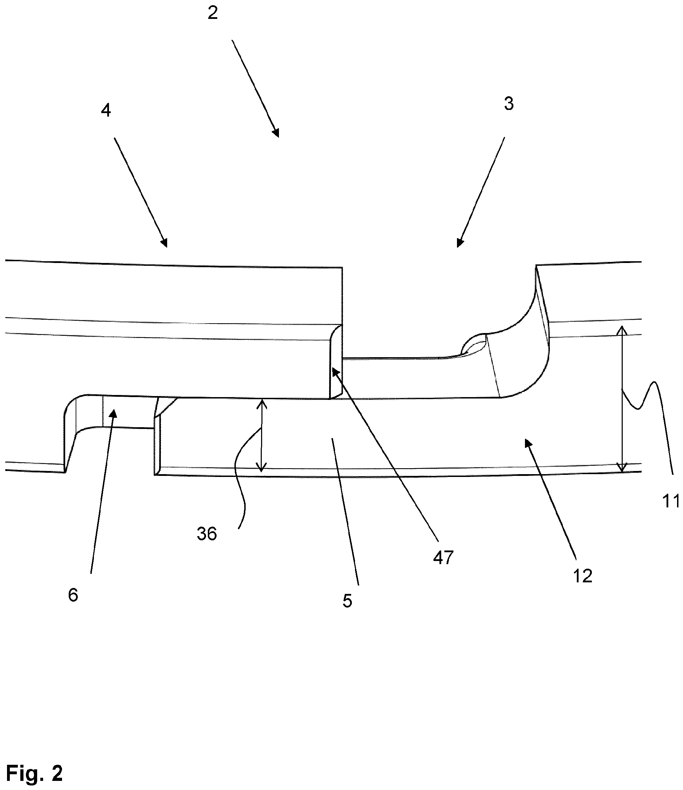

Figure 2 shows an first example of the lock section 2 in a perspective view. The male locking end 3 comprises a tongue 5 and the female locking end 4 comprising a recess 6, such that the tongue 5 is insertable into the recess 6.

The tongue 5 has a height 36 in axial direction which is smaller than the height 11 of the ring section 1 (see figure 1).

The recess 6 is opened towards the outside 44 of the piston ring 100 (see figure 1).

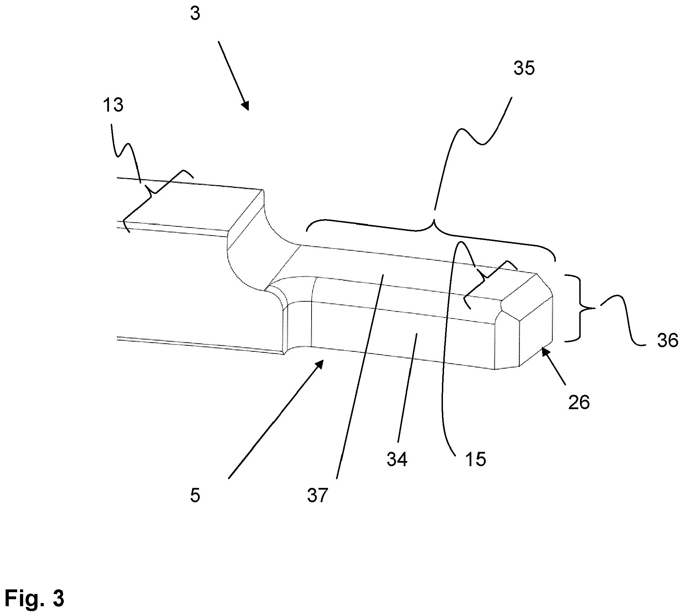

Figure 3 shows the male locking end 3 of figure 2 in a perspective view. The tongue 5 of the male locking end 3 has a maximal width 15 in radial direction which is smaller than the maximal width 13 of the ring section 1.

The tongue 5 has a radially inwardly facing sliding surface 34 basically spanned by the circumferential length 35 of the tongue 5 and the height 36 of the tongue 5. The tongue 5 further has an axial sliding surface 37 basically spanned by the circumferential length 35 and the radial width 15.

The free end 26 of the male locking end 3 is bevelled.

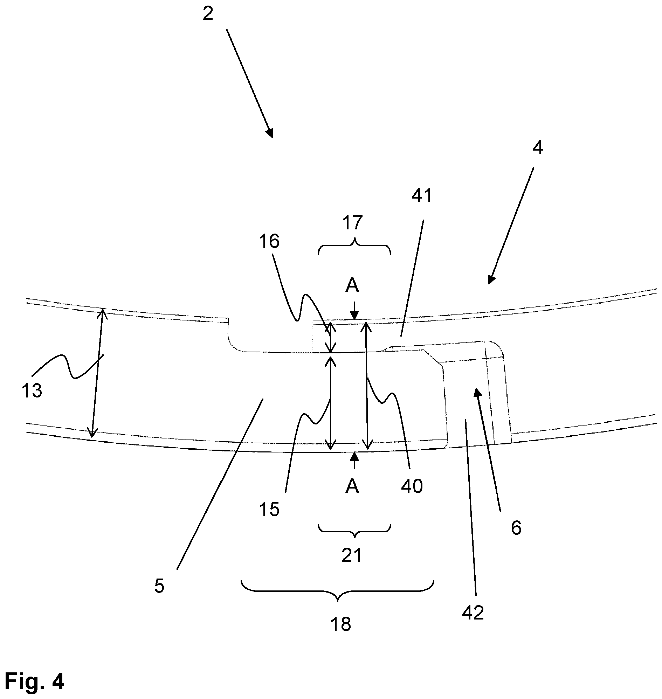

Figure 4 shows an example of an example of a lock section 2 in a top view from below as compared to figure 1.

The recess 6 of the female locking end 4 is arranged between a first shank 41 and a second shank 42.

The maximal width 13 of the ring section 1 is smaller than the sum of a maximal width 15 of at least a circumferentially extending part 18 of the tongue 5 and a maximal width 16 of at least a first circumferentially extending part 17 of the first shank 41.

The lock section 2 comprises a bridge section 21, wherein the total maximal radial width 40 is larger than the maximal width 13 of the ring section 1, also when the first shank 41 is pressed to the tongue 5.

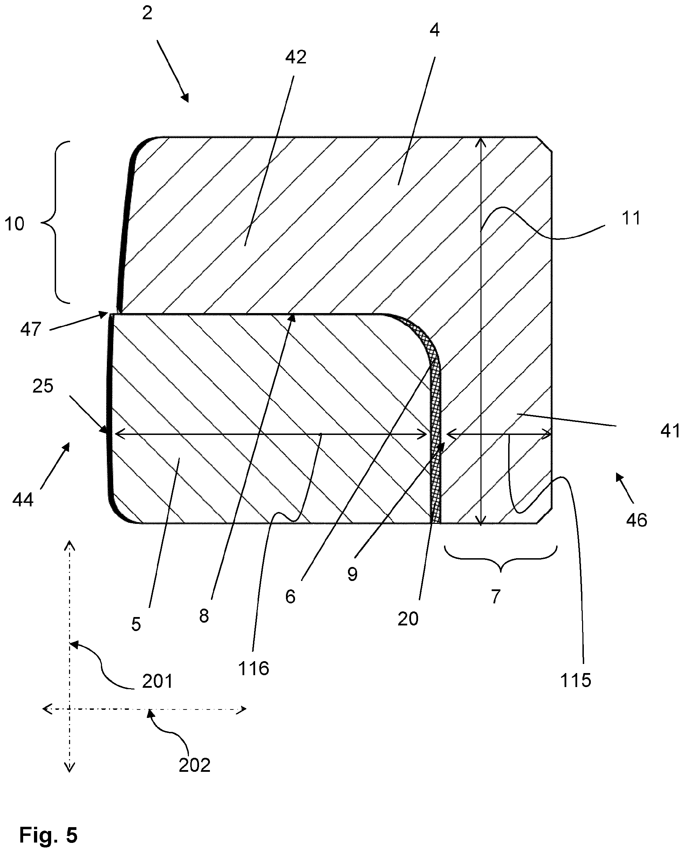

Figure 5 shows an example of a lock section 2 in a sectional view across a line AA in Figure 4, hence along a plane spanned by the axial direction 201 and a radial direction 202.

The recess 6 of the female locking end 4 is arranged between the first shank 41 and the second shank 42.

The first shank has a width 7 in radial direction 202 being smaller than the width 13 of the ring section 1 (see figure 1) and provides a radially outwardly facing guiding surface 9 being correspondent to the inwardly facing sliding surface 34 of the tongue 5 (see figure 3).

The second shank 42 has height 10 in axial direction 201 being smaller than the height 11 of the ring section 1 and provides a axial guiding surface 8 being correspondent to the axial sliding surface 37 of the tongue 5 (see figure 3).

The outward facing side 12 of the piston ring 100 (see figure 1) is cambered and in the region of the lock section 2 the maximally extending line 25 is arranged on the tongue 5.

Usually the core of the piston ring 100 is formed such that the sum of the maximal radial width 116 of the tongue 5 and the maximal radial width 115 of the first shank 41 is smaller than the maximal radial width 13 of the ring section 1 (see figure 1).

In order to provide a bridge section 21 (see figure 4) a protrusion 20 is provided on the tongue 5.

When a pressure arise from the inner side 46 of the lock section 2, the a protrusion 20 guaranties that the maximally extending line 25 remains the outermost part of the lock section 2 and the second shank 42 is not pushed radially more outward than the tongue 5. Hence the risk of damaging the liner with a possibly radially projecting edge 47 of the female locking end 4 (see figure 2) is minimized.

The protrusion 20 may be provided by coating, printing, gluing, screwing, welding, soldering, flame spraying, lasering or electroplating.

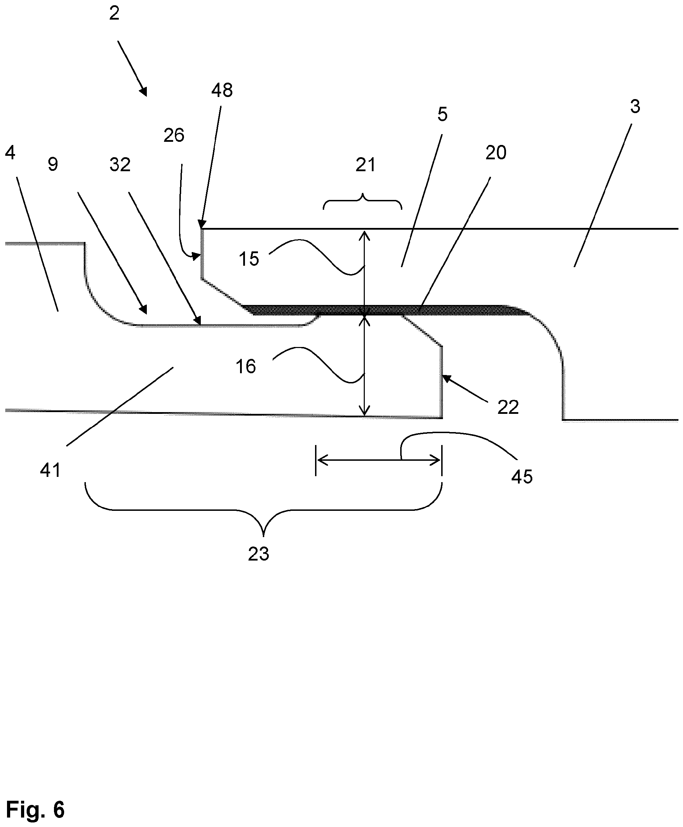

Figure 6 shows an example of a lock section in a further sectional view in a plane perpendicular to the axial direction.

A depression 32 is arranged in the radially outwardly facing guiding surface 9 of the first shank 41. The depression 32 is arranged in a circumferential distance 45 from the free end 22 of the female locking end 4.

Thus, next the depression 32 a bridge region 21 is formed wherein the sum of a maximal width 15 of the tongue 5 and the maximal width 16 of the first shank 41 is larger than the maximal width 13 of the ring section 1 (see figure 1).

The tongue 5 comprises a protrusion 20 which covers practically the complete radially inwardly facing sliding surface 34 (see figure 3).

Alternatively the protrusion may be arranged in a distance from the free end 26 of the male locking end and may only cover a part of the radially inwardly facing sliding surface 34 (not shown in the figure).

Alternatively a protrusion may be arranged on the radially outwardly facing guiding surface 9 of the first shank 41 (not shown in the figure) and may extend from the free end 22 of the female locking end 4 over a part of the circumferential length 23 of the first shank 41, the circumferential length of the part corresponding to the distance 45 (see figure 6). The protrusion may be arranged for example next to the depression 32 (not shown in the figure).

Due to the depression 32 the bridge region 21 is not arranged directly next to the free end 26 of the male locking end 3.

Hence, when a pressure force is transferred from the inner side of the piston ring to the tongue 5 via the bridge section 21, the tongue is pressed against the liner. The free end 26 of the tongue 5 still has the freedom to bend inwardly, such that the edge 48 of the tongue 5 does not damage the liner (not shown in the figure).

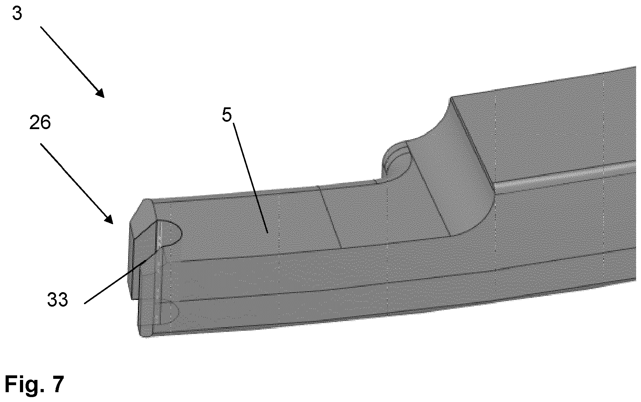

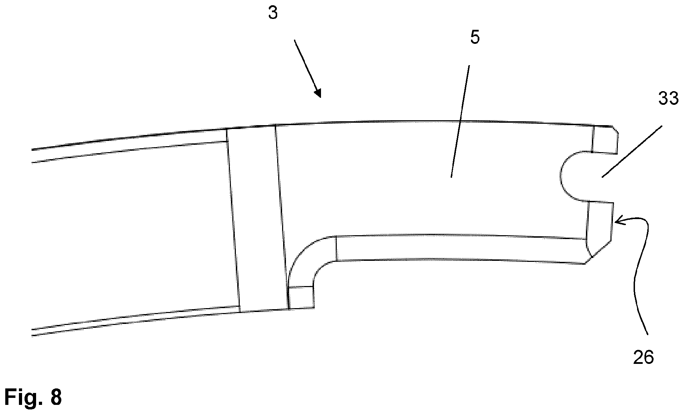

Figure 7 shows a second example of a male locking end in a perspective view and figure 8 shows the second example of a male locking end in a sectional view along a plane perpendicular to the axial direction.

An axially extending groove 33 is arranged at the free end 26 of the tongue 5.

The groove 3 provides for a higher elasticity of the end of the tongue 5, such that the end of the tongue 5 may easier bend inwardly when it comes into contact with the liner.

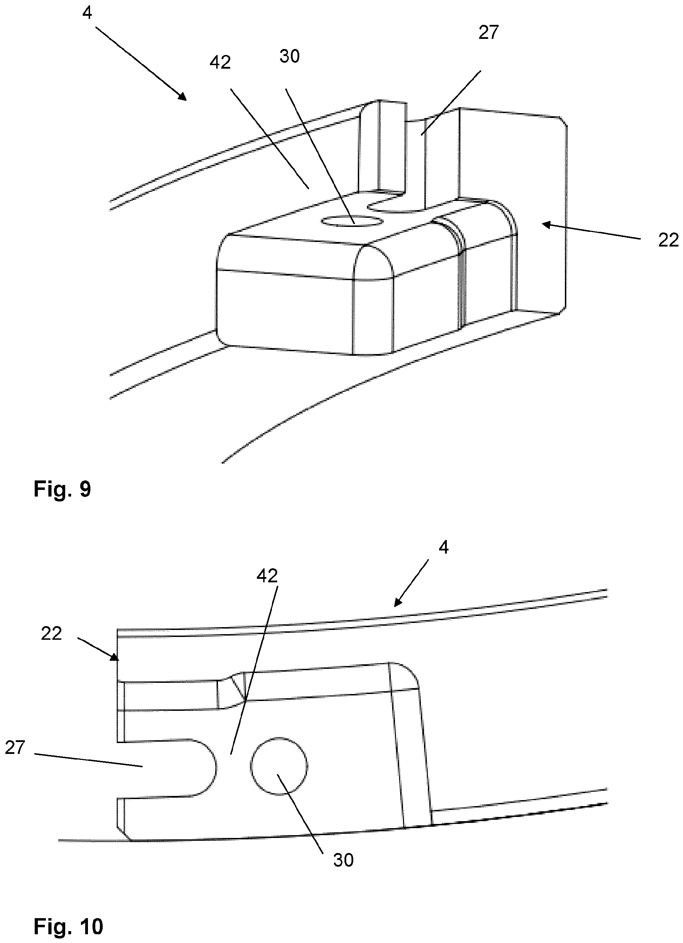

Figure 9 shows a second example of a female locking end 4 in a perspective view. Figure 10 shows the second example of the female locking end 4 in a sectional view along a plane perpendicular to the axial direction.

An axially extending groove 27 is arranged at the free end 22 of the female locking end 3 in the second shank 42. Furthermore an axial bore 30 is arranged at the female locking end 4 in the second shank 42.

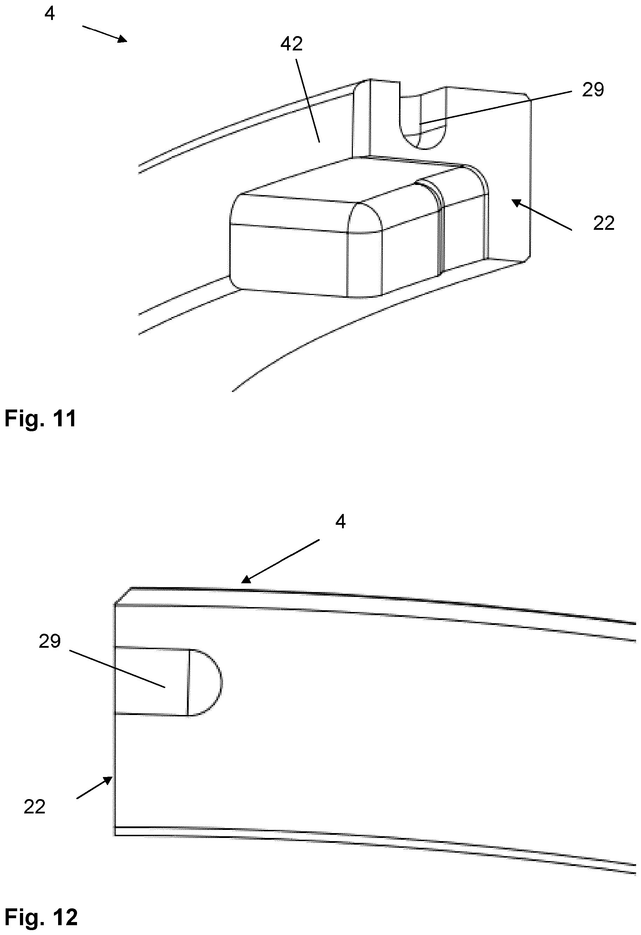

Figure 11 shows a third example of a female locking end 4 in a perspective view. Figure 12 shows the third example of a female locking end 4 in a sectional view along a plane perpendicular to the axial direction.

A circumferentially extending groove 29 is arranged in the outwardly facing surface of the second shank 42. The groove is open towards the free end 22 of the female locking end 4.

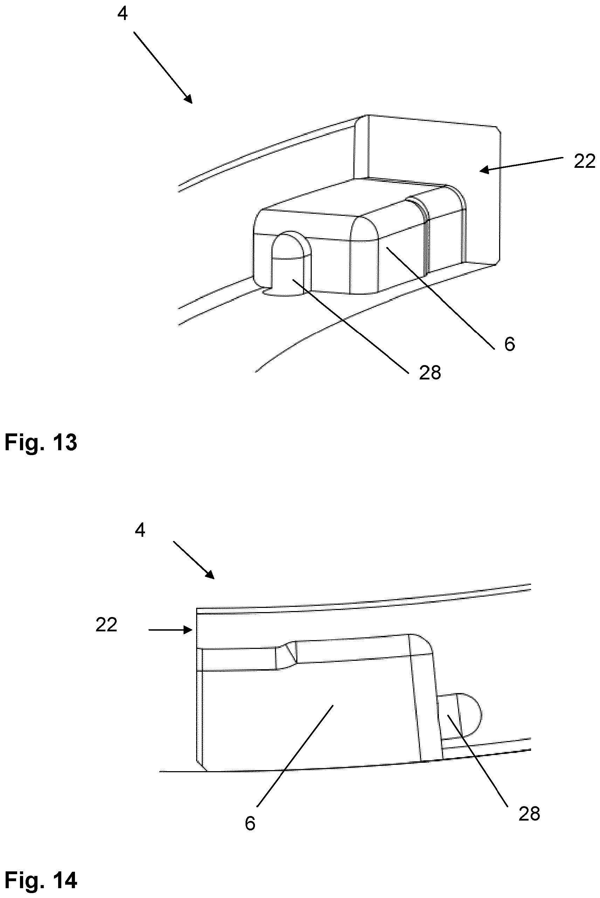

Figure 13 shows a fourth example of a female locking end 4 in a perspective view. Figure 14 shows the fourth example of the female locking end 4 in a sectional view along a plane perpendicular to the axial direction.

An axially extending groove 28 is arranged in the recess 6.

The grooves 27, 28, 29 as well as the hole 30 provide for a higher elasticity and for a better distribution of mechanical load along the female locking end 4 such that high pressure peaks are prevented at the free end 22 of the female locking end 4.

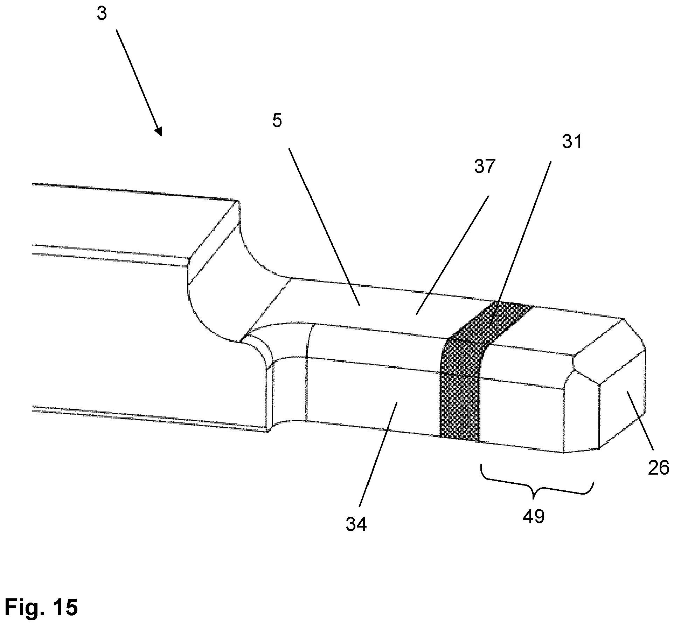

Figure 15 shows a third example of a male locking end 3 in a perspective view. A gas barrier 31 is arranged on the radially inwardly facing sliding surface 34 and on the axial sliding surface 37 of the tongue 5.

The gas barrier 31 is arranged in a distance 49 from the free end 26 of the male locking end 3.

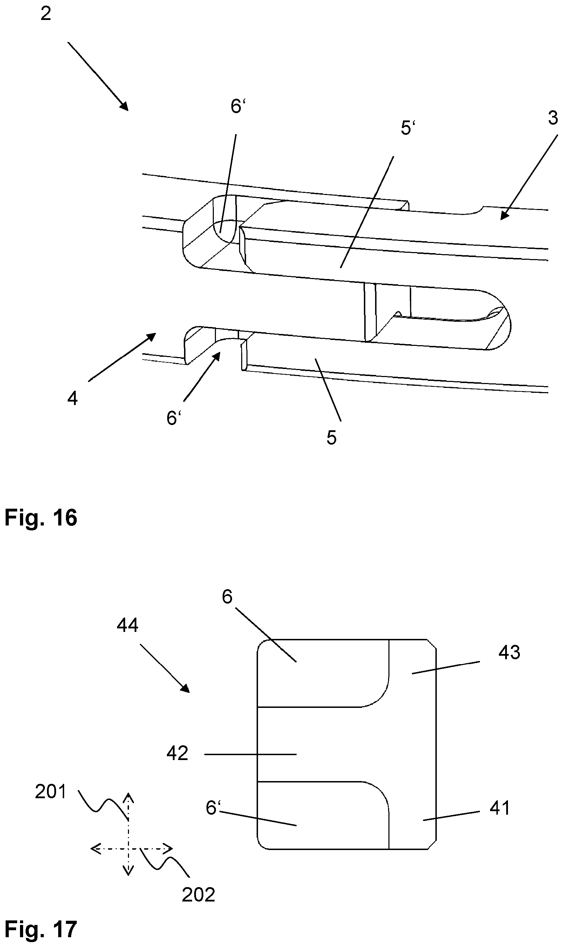

Figure 16 shows a third example of a lock section 2 in a perspective view. Figure 17 shows the third example of the lock section 2 in a sectional view along a plane spanned by the axial direction 201 and a radial direction 202.

The male locking end 3 comprises a first tongue 5 and a second tongue 5' which are parallel in their longitudinal direction. Correspondingly the female locking end 4 comprises a first recess 6 and a second recess 6', which are both open towards the outside 44 of the piston ring.

Whereas the first recess 6 is arranged between a first shank 41 and a second shank 42, the second recess 6' is arranged between a third shank 43 and the second shank 42.

As the male locking end 3 is guided within two recesses 6, 6' in circumferential direction, a relative twisting of the locking ends 3, 4 is prevented.

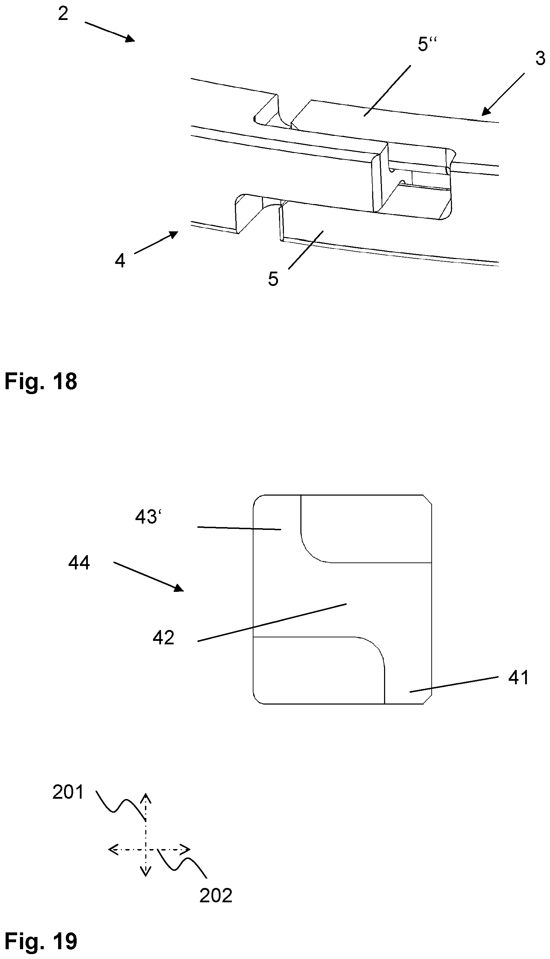

Figure 18 shows a fourth example of a lock section 2 in a perspective view. Figure 19 shows the fourth example of the lock section 2 in a sectional view along a plane spanned by the axial direction 201 and a radial direction 202.

The male locking end 3 comprises a first tongue 5 and a second tongue 5" which are parallel in their longitudinal direction. Correspondingly the female locking end 4 comprises a first recess 6 and a second recess 6", wherein the first recess 6 is open towards the outside 44 of the piston ring and the second recess 6'' is open towards the opposite side.

The first recess 6 is arranged between a first shank 41 and a second shank 42, the second recess 6' is arranged between a third shank 43' and the second shank 42.

Also in this example the two tongues 5, 5" and the two recesses 6, 6" prevent a relative twisting of the locking ends 3, 4.

Furthermore, since the recesses 6, 6" are not open towards the same side, a relative movement of the locking ends 3, 4 in radial direction 202 is prevented.

## Claims

1. Piston ring (100) for a piston of a reciprocating internal combustion engine comprising a
ring section (1) and a lock section (2),
the lock section comprising a male locking end (3) and a female locking end (4), the ring section (1) having an height (11) in axial direction (201) and maximal width (13) in radial direction (202),
wherein
the male locking end (3) comprises a tongue (5) and the female locking end (4) comprising a recess (6), such that the tongue (5) is insertable into the recess (6),
the tongue (5) having a maximal width (15) in radial direction which is smaller than the maximal width (13) of the ring section (1) and a height (36) in axial direction which is smaller than the height (11) of the ring section (1), the tongue (5) having a radially inwardly facing sliding surface (34) spanned by the a circumferential length (35) of the tongue (5) and the height (36) of the tongue (5), and the tongue (5) having an axial sliding surface (37) spanned by the circumferential length (35) and the radial width (15),
the recess (6) being opened towards the outside (44) of the piston ring (100) and being arranged between a first shank (41) and a second shank (42),
the first shank (41) having a width (7) in radial direction being smaller than the width (13) of the ring section (1) and providing a radially outwardly facing guiding surface (9) being correspondent to the inwardly facing sliding surface (34) of the tongue (5),
the second shank (42) having a height (10) in axial direction being smaller than the height (11) of the ring section (1) and providing a axial guiding surface (8) being correspondent to the axial sliding surface (37) of the tongue (5),
wherein
the maximal width (13) of the ring section (1) is smaller than the sum of a maximal width (15) of at least a circumferentially extending part (18) of the tongue (5) and
a maximal width (16) of at least a first circumferentially extending part (17) of the first shank (41),
**characterised in that**
- when assembled in a respective groove of the piston said circumferentially extending part (18) of the tongue (5) and said first circumferentially extending part (17) of the first shank (41) overlap to form a bridge section (21) wherein the total maximum radial width is larger than the maximal width (13) of the ring section (1) when the first shank (41) is pressed to the tongue (5).

2. Piston ring (1) according to claim 1, wherein the maximal width (13) of the ring section (1) is smaller than the sum of a maximal width (15) of at least a circumferentially extending part (18) of the tongue (5) and
a maximal width (16) of at least a first circumferentially extending part (17) of the first shank (41) by 0.01mm to 0.15mm or by 0.1%-0.6% of the maximal width (13) of the ring section (1).

3. Piston ring (1) according to claim 1 or 2, wherein the outward facing side (12) of the piston ring (100) is cambered and in the region of the lock section (2) the maximally extending line (25) is arranged on the tongue (5).

4. Piston ring (1) according to at least one of the preceding claims 1 or 2, wherein
a first circumferentially extending part (17) of the radially outwardly facing guiding surface (9) of the first shank (41) comprises a radially outward facing protrusion, in particular the protrusion circumferentially extends from the free end (22) of the female locking end (4) to 10%-80% of the circumferential length (23) of the first shank (41).

5. Piston ring (1) according to at least one of the preceding claims 1 or 2, wherein
a first circumferentially extending part (18) of the radially inwardly facing sliding surface (34) of the tongue (5) comprises a radially inward facing protrusion (20), in particular the protrusion (20) is arranged in a distance to the free end (26) of the male locking end (3).

6. Piston ring (1) according to at least one of the preceding claims, wherein a depression (32) is arranged in the radially outwardly facing guiding surface (9) of the first shank (41), the depression (32) preferably being arranged in a circumferential distance (45) from the free end (22) of the female locking end (4), the distance (45) more preferably having a lengths of 10%-80% of the circumferential length (23) of the first shank (41).

7. Piston ring (100) according to at least one of the preceding claims,
**characterised in that**
- at least an axially extending groove (33) is arranged at the free end (26) of the male locking end (3), for bending the end of the tongue (5) inwardly when, in use, it comes into contact with a cylinder liner, and/or
- at least one axially extending groove (27, 28) is arranged at the female locking end (4) affecting the elasticity of the locking end, such that the locking end tends to give way, to compress and/or to bend under pressure,
and/or
- at least one hole (30) is arranged at the female locking end (4).

8. Piston ring (100) according to claim 7, wherein the axially extending groove (27) is arranged at the free end (22) of the female locking end (3), in particular in the second shank (42).

9. Piston ring (100) according to claim 7 or claim 8, wherein the axially extending groove (28) is arranged in the recess (6) .

10. Piston ring (100), according to at least one of the preceding claims, for a piston of a reciprocating internal combustion engine,
comprising a ring section (1) and a lock section(2),
the lock section (2) comprising a first locking end (3) and a second locking end (4), preferably a male locking end (3) and a female locking end (4),
**characterised in that**
a gas barrier (31) is arranged on at least one of the locking ends (3, 4),
in particular the gas barrier (31) has a height of up to 1mm, preferably 0.01-0.2mm, and/or the gas barrier may have a circumferential width of 0.5-10mm, preferably 1-5mm and/or of 10%-90% of the circumferential lengths of the locking end.

11. Piston of a reciprocating internal combustion engine comprising a piston ring (1) according to at least one of the preceding claims.

12. Reciprocating internal combustion engine, in particular a large vessel engine with at least one cylinder having an inner diameter of at least 200mm, preferably a two-stroke engine and/or a two-stroke cross head engine, comprising a piston according to claim 11.

13. Method of manufacturing a piston ring (100) according to at least one of the preceding claims 1-10, comprising the following steps:
- Providing a blank, preferably formed as a closed ring with essentially rectangular cross section, for example by casting;
- Milling or cutting a lock section (2) from the blank, thereby forming ring section (1), a male locking end (3) and a female locking end (4),
the ring section (1) having an height (11) in axial direction (201) and maximal width (13) in radial direction (202),wherein
a tongue (5) is formed at the male end (3) of the piston ring (100), which tongue is insertable into a recess (5) at the female locking end (4),
the tongue (5) having a maximal width (15) in radial direction which is smaller than the maximal width (13) of the ring section (1) and a height (36) in axial direction which is smaller than the height (11) of the ring section (1),
the tongue (5) having a radially inwardly facing sliding surface (34) spanned by the a circumferential length (35) of the tongue (5) and the height (36) of the tongue, and the tongue (5) having an axial sliding surface (37) spanned by the circumferential length (35) and the radial width (15)
the recess (6) being opened towards the outside (44) of the piston ring (100) and being arranged between a first shank (41) and a second shank (42),
the first shank (14) having a width (7) in radial direction being smaller than the maximal width (13) of the ring section (1) and providing a radially outwardly facing guiding surface (9) being corresponding to the radial sliding surface of the tongue (34),
the second shank (42) having a height (10) in axial direction being smaller than the height (11) of the ring section and providing a axial guiding surface (8) being corresponding to the axial sliding surface (37) of the tongue (5),
**characterized in that** the method further comprises the following steps:
- Providing a protrusion (20)
on a first circumferentially extending part (17) of the radially outwardly facing guiding surface (9) of the first shank (41) and/or
on a first circumferentially extending part (18) of the radially inwardly facing sliding surface (34) of the tongue (5),
and/or
- providing a depression (32) in the radially outwardly facing guiding surface (9) of the first shank (41),
- such that the maximal width (13) of the ring section (1) is smaller than the sum of a maximal width (15) of at least a circumferentially extending part (18) of the tongue (5) and a maximal width (16) of at least a first circumferentially extending part (17) of the first shank (41),
preferably by 0.01mm to 0.15mm or by 0.1%-0.6% of the maximal width (13) of the ring section (1).

14. Method according to claim 13, wherein a protrusion (20) on a first circumferentially extending part (17) of the radially outwardly facing guiding surface (9) of the first shank (41) and/or on a first circumferentially extending part (18) of the radially inwardly facing sliding surface (34) of the tongue (5) is provided by coating, printing, gluing, screwing, welding, soldering, flame spraying, lasering, electroplating.

15. Method of manufacturing a piston ring according to claim 13, **characterized in that** the method further comprises the following steps:
- Cutting, milling or drilling a groove (27; 28; 29) and/or a hole (30) in the female locking end (4) and/or
- Cutting, milling or drilling a hole (30) and/or at least one vertical groove (33) at the end (26) of the male locking end (3).

16. Method according to claim 15, wherein
an axially extending groove (27) is provided at the end (22) of the female locking end (3), in particular in the second shank (42),
and/or an axially extending groove (28) is provided within the recess (6),
and/or a circumferentially extending groove (29) is arranged in the outwardly facing surface of the second shank (42),
and/or
an axial bore (32) is provided in the second shank (42).

17. Method according to one of claims 13-16, wherein the blank is coated with a coating material, in particular the outward facing surface of the blank.

## Patentansprüche

1. Kolbenring (100) für einen Kolben einer Hubkolbenbrennkraftmaschine mit einem
Ringabschnitt (1) und einen Verriegelungsabschnitt (2),
wobei der Verriegelungsabschnitt ein männliches Verschlussende (3) und ein weibliches Verschlussende (4) umfasst, wobei der Ringabschnitt (1) eine Höhe (11) in axialer Richtung (201) und eine maximale Breite (13) in radialer Richtung (202) aufweist, wobei
das männliche Verschlussende (3) eine Zunge (5) und das weibliche Verschlussende (4) eine Ausnehmung (6) aufweist, so dass die Zunge (5) in die Ausnehmung (6) einführbar ist,
die Zunge (5) eine maximale Breite (15) in radialer Richtung, die kleiner ist als die maximale Breite (13) des Ringabschnitts (1), und eine Höhe (36) in axialer Richtung, die kleiner ist als die Höhe (11) des Ringabschnitts (1), aufweist, und
die Zunge (5) eine radial nach innen gerichtete Gleitfläche (34) aufweist, die von der Umfangslänge (35) der Zunge (5) und der Höhe (36) der Zunge (5) überspannt wird, und die Zunge (5) eine axiale Gleitfläche (37) aufweist, die von der Umfangslänge (35) und der radialen Breite (15) überspannt wird,
die Ausnehmung (6) zur Außenseite (44) des Kolbenrings (100) hin geöffnet ist und zwischen einem ersten Schenkel (41) und einem zweiten Schenkel (42) angeordnet ist,
wobei der erste Schenkel (41) eine Breite (7) in radialer Richtung aufweist, die kleiner ist als die Breite (13) des Ringabschnitts (1), und eine radial nach außen weisende Führungsfläche (9) aufweist, die der nach inneren weisenden Gleitfläche (34) der Zunge (5) entspricht,
der zweite Schenkel (42) eine Höhe (10) in axialer Richtung aufweist, die kleiner ist als die Höhe (11) des Ringabschnitts (1), und eine axiale Führungsfläche (8) bereitstellt, die mit der axialen Gleitfläche (37) der Zunge (5) übereinstimmt,
wobei
die maximale Breite (13) des Ringabschnitts (1) kleiner ist als die Summe aus einer maximalen Breite (15) von mindestens einem sich in Umfangsrichtung erstreckenden Anteil (18) der Zunge (5) und
einer maximalen Breite (16) mindestens eines ersten sich in Umfangsrichtung erstreckenden Anteils (17) des ersten Schenkels (41),
**dadurch gekennzeichnet, dass** der sich in Umfangsrichtung erstreckende Anteil (18) der Zunge (5) und der erste sich in Umfangsrichtung erstreckende Anteil (17) des ersten Schenkels (41) sich überlappen, wenn sie in einer entsprechenden Nut des Kolbens montiert sind, um einen Brückenabschnitt (21) zu bilden, wobei die maximale radiale Gesamtbreite größer ist als die maximale Breite (13) des Ringabschnitts (1), wenn der erste Schenkel (41) an die Zunge (5) gepresst wird.

2. Kolbenring (1) nach Anspruch 1, wobei die maximale Breite (13) des Ringabschnitts (1) kleiner ist als die Summe aus einer maximalen Breite (15) mindestens eines in Umfangsrichtung verlaufenden Anteils (18) der Zunge (5) und
einer maximalen Breite (16) mindestens eines ersten sich in Umfangsrichtung erstreckenden Anteils (17) des ersten Schenkels (41) um 0,01 mm bis 0,15 mm oder um 0,1 % bis 0,6 % der maximalen Breite (13) des Ringabschnitts (1).

3. Kolbenring (1) nach Anspruch 1 oder 2, wobei die nach außen weisende Seite (12) des Kolbenrings (100) gewölbt ist und im Bereich des Verriegelungsabschnitts (2) die maximal ausfahrende Linie (25) auf der Zunge (5) angeordnet ist.

4. Kolbenring (1) nach mindestens einem der vorhergehenden Ansprüche 1 oder 2, wobei
ein erster sich in Umfangsrichtung erstreckender Anteil (17) der radial nach außen weisenden Führungsfläche (9) des ersten Schenkels (41) einen radial nach außen weisenden Vorsprung aufweist, insbesondere sich der Vorsprung in Umfangsrichtung vom freien Ende (22) des weiblichen Verschlussendes (4) auf 10%-80% der Umfangslänge (23) des ersten Schenkels (41) erstreckt.

5. Kolbenring (1) nach mindestens einem der vorhergehenden Ansprüche 1 oder 2, wobei
ein erster sich in Umfangsrichtung erstreckender Anteil (18) der radial nach innen weisenden Gleitfläche (34) der Zunge (5) einen radial nach innen weisenden Vorsprung (20) aufweist, insbesondere der Vorsprung (20) in einem Abstand zum freien Ende (26) des männlichen Verschlussendes (3) angeordnet ist.

6. Kolbenring (1) nach mindestens einem der vorhergehenden Ansprüche, wobei in der radial nach außen weisenden Führungsfläche (9) des ersten Schenkels (41) eine Vertiefung (32) angeordnet ist, wobei die Vertiefung (32) vorzugsweise in einem Umfangsabstand (45) vom freien Ende (22) des weiblichen Verschlussendes (4) angeordnet ist, wobei der Abstand (45) vorzugsweise eine Länge von 10%-80% der Umfangslänge (23) des ersten Schenkels (41) aufweist.

7. Kolbenring (100) nach mindestens einem der vorhergehenden Ansprüche,
**dadurch gekennzeichnet, dass**
- mindestens eine axial verlaufende Nut (33) am freien Ende (26) des Verschlussendes (3) angeordnet ist, um das Ende der Zunge (5) nach innen zu biegen, wenn sie im Gebrauch mit einer Zylinderbuchse in Kontakt kommt, und/oder
- mindestens eine sich axial erstreckende Nut (27, 28) am weiblichen Verschlussende (4) angeordnet ist, die die Elastizität des Verschlussendes beeinflusst, so dass das Verschlussende dazu neigt, unter Druck nachzugeben, sich zusammenzudrücken und/oder zu biegen,
und/oder
- mindestens ein Loch (30) am weiblichen Verschlussende (4) angeordnet ist.

8. Kolbenring (100) nach Anspruch 7, wobei die axial verlaufende Nut (27) am freien Ende (22) des weiblichen Verschlussendes (3), insbesondere im zweiten Schenkel (42), angeordnet ist.

9. Kolbenring (100) nach Anspruch 7 oder Anspruch 8, wobei die axial verlaufende Nut (28) in der Ausnehmung (6) angeordnet ist.

10. Kolbenring (100) nach mindestens einem der vorhergehenden Ansprüche für einen Kolben einer Hubkolben-Brennkraftmaschine, mit einem Ringabschnitt (1) und einem Verriegelungsabschnitt (2),
wobei der Verriegelungsabschnitt (2) ein erstes Verschlussende (3) und ein zweites Verschlussende (4), vorzugsweise ein männliches Verschlussende (3) und ein weibliches Verschlussende (4), aufweist,
**dadurch gekennzeichnet, dass**
an mindestens einem der Verschlussenden (3, 4) eine Gassperre (31) angeordnet ist,
insbesondere die Gassperre (31) eine Höhe von bis zu 1mm, vorzugsweise 0,01-0,2mm, aufweist und/oder die Gassperre eine Umfangsbreite von 0,5-10mm, vorzugsweise 1-5mm und/oder von 10%-90% der Umfangslängen des Verschlussendes aufweisen kann.

11. Kolben einer Hubkolbenbrennkraftmaschine, umfassend einen Kolbenring (1) nach mindestens einem der vorhergehenden Ansprüche.

12. Hubkolbenbrennkraftmaschine, insbesondere Großschiffsmotor mit mindestens einem Zylinder mit einem Innendurchmesser von mindestens 200 mm, vorzugsweise Zweitaktmotor und/oder Zweitakt-Kreuzkopfmotor, mit einem Kolben nach Anspruch 11.

13. Verfahren zur Herstellung eines Kolbenrings (100) nach mindestens einem der vorhergehenden Ansprüche 1-10, umfassend die folgenden Schritte:
- Bereitstellen eines Rohlings, der vorzugsweise als geschlossener Ring mit im Wesentlichen rechteckigem Querschnitt ausgebildet ist, beispielsweise durch Gießen;
- Fräsen oder Schneiden eines Verriegelungsabschnitts (2) aus dem Rohling, wodurch ein Ringabschnitt (1), ein männliches Verschlussende (3) und ein weibliches Verschlussende (4) gebildet werden,
wobei der Ringabschnitt (1) eine Höhe (11) in axialer Richtung (201) und eine maximale Breite (13) in radialer Richtung (202) aufweist,wobei
am männlichen Ende (3) des Kolbenrings (100) eine Zunge (5) ausgebildet ist, die in eine Ausnehmung (5) am weiblichen Verschlussende (4) einführbar ist,
wobei die Zunge (5) eine maximale Breite (15) in radialer Richtung aufweist, die kleiner ist als die maximale Breite (13) des Ringabschnitts (1), und eine Höhe (36) in axialer Richtung, die kleiner ist als die Höhe (11) des Ringabschnitts (1),
die Zunge (5) eine radial nach innen weisende Gleitfläche (34) aufweist, die von der Umfangslänge (35) der Zunge (5) und der Höhe (36) der Zunge aufgespannt wird, und die Zunge (5) eine axiale Gleitfläche (37) aufweist, die von der Umfangslänge (35) und der radialen Breite (15) aufgespannt wird
die Ausnehmung (6) zur Außenseite (44) des Kolbenrings (100) hin geöffnet ist und zwischen einem ersten Schenkel (41) und einem zweiten Schenkel (42) angeordnet ist,
der erste Schenkel (14) eine Breite (7) in radialer Richtung aufweist, die kleiner ist als die maximale Breite (13) des Ringabschnitts (1) und eine radial nach außen weisende Führungsfläche (9) aufweist, die der radialen Gleitfläche der Zunge (34) entspricht,
der zweite Schenkel (42) eine Höhe (10) in axialer Richtung aufweist, die kleiner ist als die Höhe (11) des Ringabschnitts, und eine axiale Führungsfläche (8) bereitstellt, die der axialen Gleitfläche (37) der Zunge (5) entspricht,
**dadurch gekennzeichnet, dass** das Verfahren ferner die folgenden Schritte umfasst:
- Bereitstellen eines Vorsprungs (20)
auf einem ersten sich in Umfangsrichtung erstreckenden Anteil (17) der radial nach außen weisenden Führungsfläche (9) des ersten Schenkels (41) und/oder
auf einem ersten sich in Umfangsrichtung erstreckenden Anteil (18) der radial nach innen weisenden Gleitfläche (34) der Zunge (5),
und/oder
- Bereitstellen einer Vertiefung (32) in der radial nach außen gerichteten Führungsfläche (9) des ersten Schenkels (41),
- so dass die maximale Breite (13) des Ringabschnitts (1) kleiner ist als die Summe einer maximalen Breite (15) von mindestens einem sich in Umfangsrichtung erstreckenden Teil (18) der Zunge (5) und einer maximalen Breite (16) von mindestens einem ersten sich in Umfangsrichtung erstreckenden Teil (17) des ersten Schenkels (41),
vorzugsweise um 0,01mm bis 0,15mm oder um 0,1%-0,6% der maximalen Breite (13) des Ringabschnitts (1).

14. Verfahren nach Anspruch 13, wobei ein Vorsprung (20) an einem ersten sich in Umfangsrichtung erstreckenden Anteil (17) der radial nach außen weisenden Führungsfläche (9) des ersten Schenkels (41) und/oder an einem ersten sich in Umfangsrichtung erstreckenden Anteil (18) der radial nach innen weisenden Gleitfläche (34) der Zunge (5) durch Beschichten, Bedrucken, Kleben, Schrauben, Schweißen, Löten, Flammspritzen, Lasern, Galvanisieren hergestellt wird.

15. Verfahren zur Herstellung eines Kolbenringes, **dadurch gekennzeichnet, dass** das Verfahren ferner die folgenden Schritte umfasst:
- Schneiden, Fräsen oder Bohren einer Nut (27; 28; 29) und/oder eines Lochs (30) in das Verschlussende (4) der Aufnahme und/oder
- Schneiden, Fräsen oder Bohren eines Lochs (30) und/oder mindestens einer vertikalen Nut (33) am Ende (26) des männlichen Verschlussendes (3).

16. Verfahren nach Anspruch 15, wobei
eine axial verlaufende Nut (27) am Ende (22) des weiblichen Verschlussendes (3), insbesondere im zweiten Schenkel (42), vorgesehen wird
und/oder eine axial verlaufende Nut (28) in der Ausnehmung (6) vorgesehen ist,
und/oder in der nach außen weisenden Fläche des zweiten Schenkels (42) eine in Umfangsrichtung verlaufende Nut (29) angeordnet ist,
und/oder
eine axiale Bohrung (32) in dem zweiten Schenkel (42) vorgesehen ist.

17. Verfahren nach einem der Ansprüche 13-16, wobei der Rohling mit einem Beschichtungsmaterial beschichtet wird, insbesondere die nach außen weisende Oberfläche des Rohlings.

## Revendications

1. Segment de piston (100) pour un piston de moteur à combustion interne alternatif comprenant une section de segment de piston (1) et une section de verrouillage (2),
la section de verrouillage comprenant une extrémité de verrouillage mâle (3) et une extrémité de verrouillage femelle (4), la section de segment de piston (1) ayant une hauteur (11) dans la direction axiale (201) et une largeur maximale (13) dans la direction radiale (202),
dans laquelle
l'extrémité de verrouillage mâle (3) comprend une languette (5) et l'extrémité de verrouillage femelle (4) comprend un évidement (6), de sorte que la languette (5) puisse être insérée dans l'évidement (6),
la languette (5) ayant une largeur maximale (15) dans la direction radiale qui est inférieure à la largeur maximale (13) de la section de segment de piston (1) et une hauteur (36) dans la direction axiale qui est inférieure à la hauteur (11) de la section de segment de piston (1),
la languette (5) ayant une surface de glissement (34) orientée radialement vers l'intérieur, couverte par la longueur circonférentielle (35) de la languette (5) et la hauteur (36) de la languette (5), et la languette (5) ayant une surface de glissement axiale (37) couverte par la longueur circonférentielle (35) et la largeur radiale (15), l'évidement (6) étant ouvert vers l'extérieur (44) du segment de piston (100) et étant disposé entre une première tige (41) et une seconde tige (42),
la première tige (41) ayant une largeur (7) dans la direction radiale, inférieure à la largeur (13) du section de segment de piston (1) et fournissant une surface de guidage (9) orientée radialement vers l'extérieur correspondant à la surface de glissement (34) orientée vers l'intérieur de la languette (5),
la seconde tige (42) ayant une hauteur (10) dans le sens axial, inférieure à la hauteur (11) de la section de segment de piston (1) et présentant une surface de guidage axial (8) correspondant à la surface de glissement axial (37) de la languette (5),
dans lequel
la largeur maximale (13) de la section de segment de piston (1) est inférieure à la somme de la largeur maximale (15) d'au moins une partie s'étendant de manière circonférentielle (18) de la languette (5) et d'une largeur maximale (16) d'au moins une première partie (17) s'étendant sur la circonférence de la première tige (41),
**caractérisé en ce que**, lorsqu'il est assemblé dans une gorge respective du piston, ladite partie s'étendant de manière circonférentielle (18) de la languette (5) et ladite première partie s'étendant de manière circonférentielle (17) de la première tige (41) se chevauchent pour former une section de pont (21) dans laquelle la largeur radiale maximale totale est supérieure à la largeur maximale (13) de la section de segment de piston (1) lorsque la première tige (41) est pressée sur la languette (5).

2. Segment de piston (1) selon la revendication 1, dans laquelle la largeur maximale (13) de la section de segment de piston (1) est inférieure à la somme d'une largeur maximale (15) d'au moins une partie s'étendant de manière circonférentielle (18) de la languette (5) et d'une largeur maximale (16) de la section de segment de piston (1), lorsque la première tige (41) est pressée contre la languette (5) et
d'une largeur maximale (16) d'au moins une première partie (17) de la première tige (41) s'étendant sur la circonférence de 0,01 mm à 0,15 mm ou de 0,1 % à 0,6 % de la largeur maximale (13) de la section de segment de piston (1).

3. Segment de piston (1) selon la revendication 1 ou 2, dans laquelle le côté tourné vers l'extérieur (12) du segment de piston (100) est cambré et dans la région de la section de verrouillage (2), la ligne d'extension maximale (25) est disposée sur la languette (5).

4. Segment de piston (1) selon au moins l'une des revendications précédentes 1 ou 2, dans lesquels
une première partie s'étendant de manière circonférentielle (17) de la surface de guidage orientée radialement vers l'extérieur (9) de la première tige (41) comprend une protubérance orientée radialement vers l'extérieur, en particulier la protubérance s'étend de manière circonférentielle depuis l'extrémité libre (22) de l'extrémité de verrouillage femelle (4) jusqu'à 10%-80% de la longueur circonférentielle (23) de la première tige (41).

5. Segment de piston (1) selon au moins l'une des revendications précédentes 1 ou 2, dans lequel
une première partie s'étendant de manière circonférentielle (18) de la surface de glissement (34) de la languette (5) tournée vers l'intérieur comprend une protubérance (20) tournée vers l'intérieur, en particulier la protubérance (20) est disposée à l'écart de l'extrémité libre (26) de l'extrémité de verrouillage mâle (3).

6. Segment de piston (1) selon au moins l'une des revendications précédentes, dans laquelle une dépression (32) est ménagée dans la surface de guidage (9) orientée radialement vers l'extérieur de la première tige (41), la dépression (32) étant de préférence ménagée à une distance circonférentielle (45) de l'extrémité libre (22) de l'extrémité de verrouillage femelle (4), la distance (45) ayant de préférence une longueur comprise entre 10% et 80% de la longueur circonférentielle (23) de la première tige (41).

7. Segment de piston (100) selon au moins l'une des revendications précédentes,
**caractérisé en ce que**
- au moins une rainure s'étendant axialement (33) est disposée à l'extrémité libre (26) de l'extrémité mâle de verrouillage (3), pour plier l'extrémité de la languette (5) vers l'intérieur lorsque, en cours d'utilisation, elle entre en contact avec une chemise de cylindre, et/ou
- au moins une rainure s'étendant axialement (27, 28) est disposée à l'extrémité de verrouillage femelle (4), affectant l'élasticité de l'extrémité de verrouillage, de sorte que l'extrémité de verrouillage tend à céder, à se comprimer et/ou à se plier sous l'effet de la pression, et/ou
- au moins un trou (30) est disposé à l'extrémité femelle de verrouillage (4).

8. Segment de piston (100) selon la revendication 7, dans laquelle la rainure s'étendant axialement (27) est disposée à l'extrémité libre (22) de l'extrémité de verrouillage femelle (3), en particulier dans la deuxième tige (42).

9. Segment de piston (100) selon la revendication 7 ou la revendication 8, dans lesquels la rainure s'étendant axialement (28) est disposée dans l'évidement (6).

10. Segment de piston (100), selon au moins l'une des revendications précédentes, pour un piston d'un moteur à combustion interne alternatif,
comprenant une section de segment de piston (1) et une section de verrouillage (2),
la section de verrouillage (2) comprenant une première extrémité de verrouillage (3) et une deuxième extrémité de verrouillage (4), de préférence une extrémité de verrouillage mâle (3) et une extrémité de verrouillage femelle (4), **caractérisé en ce que**
une barrière anti-gaz (31) est disposée sur au moins une des extrémités de verrouillage (3, 4),
en particulier, la barrière de gaz (31) a une hauteur allant jusqu'à 1 mm, de préférence 0,01-0,2 mm, et/ou la barrière de gaz peut avoir une largeur circonférentielle de 0,5-10 mm, de préférence 1-5 mm et/ou de 10%-90% des longueurs circonférentielles de l'extrémité de verrouillage.

11. Piston d'un moteur à combustion interne alternatif comprenant une section de segment de piston (1) selon au moins l'une des revendications précédentes.

12. Moteur à combustion interne alternatif, en particulier moteur de grand vaisseau avec au moins un cylindre ayant un diamètre intérieur d'au moins 200 mm, de préférence moteur à deux temps et/ou moteur à tête croisée à deux temps, comprenant un piston selon la revendication 11.

13. Procédé de fabrication d'un segment de piston (100) selon au moins l'une des revendications précédentes 1-10, comprenant les étapes suivantes :
- Fournir une ébauche, de préférence formée comme un anneau fermé avec une section transversale essentiellement rectangulaire, par exemple par moulage ;
- Fraisage ou découpe d'une section de verrouillage (2) à partir de l'ébauche, formant ainsi une section de segment de piston (1), une extrémité de verrouillage mâle (3) et une extrémité de verrouillage femelle (4),
la section de segment de piston (1) ayant une hauteur (11) dans la direction axiale (201) et une largeur maximale (13) dans la direction radiale (202), dans laquelle une languette (5) est formée à l'extrémité mâle (3) du segment de piston (100), laquelle languette (5) pouvant être insérée dans un évidement (6) au niveau de l'extrémité de verrouillage femelle (4),
la languette (5) ayant une largeur maximale (15) dans la direction radiale qui est inférieure à la largeur maximale (13) de la section de segment de piston (1) et une hauteur (36) dans la direction axiale qui est inférieure à la hauteur (11) de la section de segment de piston (1),
la languette (5) ayant une surface de glissement (34) orientée radialement vers l'intérieur, couverte par la longueur circonférentielle (35) de la languette (5) et la hauteur (36) de la languette, et la languette (5) ayant une surface de glissement axial (37) couverte par la longueur circonférentielle (35) et la largeur radiale (15) l'évidement (6) étant ouvert vers l'extérieur (44) du segment de piston (100) et étant disposé entre une première tige (41) et une seconde tige (42),
la première tige (14) ayant une largeur (7) dans le sens radial inférieure à la largeur maximale (13) de la section du segment (1) et présentant une surface de guidage (9) orientée radialement vers l'extérieur correspondant à la surface de glissement radial de la languette (34),
la seconde tige (42) ayant une hauteur (10) dans le sens axial inférieure à la hauteur (11) de la section de segment de piston et présentant une surface de guidage axial (8) correspondant à la surface de glissement axial (37) de la languette (5),
**caractérisé en ce que** le procédé comprend en outre les étapes suivantes :
- Fournir une protubérance (20) sur une première partie s'étendant de manière circonférentielle (17) de la surface de guidage orientée radialement vers l'extérieur (9) de la première tige (41) et/ou
sur une première partie s'étendant sur la circonférence (18) de la surface de glissement (34) de la languette (5) orientée radialement vers l'intérieur, et/ou
- Fournir une dépression (32) dans la surface de guidage orientée radialement vers l'extérieur (9) de la première tige (41),
- de telle sorte que la largeur maximale (13) de la section de segment de piston (1) soit inférieure à la somme de la largeur maximale (15) d'au moins une partie s'étendant de manière circonférentielle (18) de la languette (5) et de la largeur maximale (16) d'au moins une première partie s'étendant de manière circonférentielle (17) de la première tige (41),
de préférence de 0,01 mm à 0,15 mm ou de 0,1 % à 0,6 % de la largeur maximale (13) de la section de segment de piston (1).

14. Procédé selon la revendication 13, dans lequel une protubérance (20) sur une première partie s'étendant de manière circonférentielle (17) de la surface de guidage radialement tournée vers l'extérieur (9) de la première tige (41) et/ou sur une première partie s'étendant de manière circonférentielle (18) de la surface de glissement radialement tournée vers l'intérieur (34) de la languette (5) est obtenue par revêtement, impression, collage, vissage, soudage, brasage, pulvérisation à la flamme, laser, galvanoplastie.

15. Procédé de fabrication d'un segment de piston **caractérisé par le fait que** le procédé comprend en outre les étapes suivantes :
- Découper, fraiser ou percer une rainure (27 ; 28 ; 29) et/ou un trou (30) dans l'extrémité de verrouillage femelle (4) et/ou
- Découper, fraiser ou percer un trou (30) et/ou au moins une rainure verticale (33) au niveau de l'extrémité (26) de l'extrémité de verrouillage mâle (3).

16. Procédé selon la revendication 15, dans lequel
une rainure (27) s'étendant axialement est prévue à l'extrémité (22) de l'extrémité de verrouillage femelle (3), en particulier dans la deuxième tige (42),
et/ou une rainure s'étendant axialement (28) est prévue à l'intérieur de l'évidement (6),
et/ou une rainure s'étendant de manière circonférentielle (29) est arrangée dans la surface tournée vers l'extérieur de la seconde tige (42),
et/ou
un alésage axial (32) est prévu dans la seconde tige (42).

17. Procédé selon l'une des revendications 13 à 16, dans lequel l'ébauche est revêtue d'un matériau de revêtement, en particulier la surface extérieure de l'ébauche.
